# EUROPÄISCHE PATENTANMELDUNG

(11) **EP 3 522 102 A1**
(43) Veröffentlichungstag der Anmeldung: **07.08.2019**
(21) Anmeldenummer: 18211628.5
(22) Anmeldetag: 11.12.2018
(51) Int. Cl.: G06Q 50/30

(54) **VERFAHREN ZUM BETREIBEN EINES WENIGSTENS EIN TRANSPORTMITTEL AUFWEISENDEN TRANSPORTSYSTEMS SOWIE ENTSPRECHENDES TRANSPORTSYSTEM**

(30) Priorität: 05.02.2018 DE 102018201687
(71) Anmelder: AUDI AG, 85045 Ingolstadt (DE)
(72) Erfinder: Beutler, Stephan, 85049 Ingolstadt (DE); Ertl, Maximilian, 85049 Ingolstadt (DE)

(57) **Zusammenfassung**

Die Erfindung betrifft ein Verfahren zum Betreiben eines wenigstens ein Transportmittel (2) aufweisenden Transportsystems (1). Dabei ist vorgesehen, dass ein Benutzungszeitraum des Transportmittels (2) durch einen Benutzer oder zumindest ein Beginn des Benutzungszeitraums erfasst wird, indem auf eine Benutzung des Transportmittels (2) erkannt wird, falls wenigstens zwei der nachfolgenden Bedingungen erfüllt sind: Eine Kommunikationsverbindung einer Assistenzeinrichtung des Benutzers mit dem Transportsystem (1) liegt vor oder wird aufgebaut; eine Zuladung des Transportmittels (2) oder eine Änderung der Zuladung wird erkannt; und eine Bewegung des Transportmittels (2) und/oder ein Betrieb einer Antriebseinrichtung des Transportmittels (2) liegen vor oder werden eingeleitet. Die Erfindung betrifft weiterhin ein Transportsystem (1).

## Beschreibung

Die Erfindung betrifft ein Verfahren zum Betreiben eines wenigstens ein Transportmittel aufweisenden Transportsystems sowie ein entsprechendes Transportsystem.

Aus dem Stand der Technik ist beispielsweise die Druckschrift DE 10 2008 008 307 B3 bekannt. Diese beschreibt eine Vorrichtung zum Aktivieren und Deaktivieren einer Zugangskontrolleinrichtung, welche zum Empfang eines von einem mobilen Kommunikationsendgerät ausgesendeten elektronischen Öffnungs- und Verriegelungscodes ausgelegt ist. Dabei soll die Vorrichtung einen NFC-Schaltkreis umfassen, der aus einem Transponder-IC, einem Transceiver-IC sowie aus einem eine Spule und einen Kondensator umfassenden Schwingkreis aufgebaut ist, wobei der Transponder-IC und der Transceiver-IC über einen Schalter wechselweise mit dem Schwingkreis verbindbar sind und der Transponder-IC über einen Halbleiter-Schalter an den Schalter angeschlossen ist.

Es ist Aufgabe der Erfindung, ein Verfahren zum Betreiben eines Transportsystems vorzuschlagen, welches gegenüber bekannten Verfahren Vorteile aufweist, insbesondere eine flexible Nutzung des wenigstens einen Transportmittels sowie eine zuverlässige Abrechnung gegenüber einem Benutzer des Transportmittels ermöglicht.

Dies wird erfindungsgemäß mit einem Verfahren mit den Merkmalen des Anspruchs 1 erreicht. Dabei ist vorgesehen, dass ein Benutzungszeitraum des Transportmittels durch einen Benutzer oder zumindest einen Beginn des Benutzungszeitraums erfasst wird, indem auf eine Benutzung des Transportmittels erkannt wird, falls wenigstens zwei der nachfolgenden Bedingungen erfüllt sind: Eine Kommunikationsverbindung einer Assistenzeinrichtung des Benutzers mit dem Transportsystem liegt vor oder wird aufgebaut; eine Zuladung des Transportmittels oder eine Änderung der Zuladung wird erkannt; und eine Bewegung des Transportmittels und/oder ein Betrieb einer Antriebseinrichtung des Transportmittels liegen vor oder werden eingeleitet.

Das Transportsystem umfasst das wenigstens eine Transportmittel, also beispielsweise genau ein Transportmittel, bevorzugt jedoch eine Vielzahl von Transportmitteln. Sofern im Rahmen dieser Beschreibung von dem wenigstens einen Transportmittel oder dem Transportmittel die Rede ist, so sind die Ausführungen stets auf die Vielzahl von Transportmitteln beziehungsweise die mehreren Transportmittel übertragbar. Das Transportsystem stellt das Transportmittel dem Benutzer zumindest temporär, vorzugsweise lediglich temporär, oder dauerhaft zur Verfügung. Das Transportmittel ist jedoch stets dem Transportsystem zugeordnet und steht nicht im Eigentum des Benutzers.

Beispielsweise zu Abrechnungszwecken soll daher der Benutzungszeitraum des Transportmittels durch den Benutzer erfasst werden. Dies soll auf möglichst zuverlässige und flexible Art und Weise erfolgen, insbesondere um eine zuverlässige und transparente Abrechnung gegenüber dem Benutzer zu gewährleisten. Zu diesem Zweck wird auf drei Bedingungen zurückgegriffen, von welchen wenigstens zwei erfüllt sein müssen, um auf die Benutzung des Transportmittels und mithin auf das Vorliegen des Benutzungszeitraums oder zumindest den Beginn des Nutzungszeitraums zu erkennen.

Eine erste Bedingung erfordert, dass die Kommunikationsverbindung der Assistenzeinrichtung des Benutzers mit dem Transportsystem momentan vorliegt oder zumindest aufgebaut wird. Unter der Assistenzeinrichtung ist beispielsweise ein Mobilgerät zu verstehen, insbesondere ein personalisiertes Mobilgerät, welches dem Benutzer zugeordnet beziehungsweise zuordenbar ist. Über die Assistenzeinrichtung ist insoweit der Benutzer identifizierbar, zumindest zu Abrechnungszwecken. Besonders bevorzugt ermöglicht die Assistenzeinrichtung eine eindeutige Identifizierung des Benutzers.

Die Kommunikationsverbindung zwischen der Assistenzeinrichtung und dem Transportsystem, insbesondere dem Transportmittel, kann von Seiten der Assistenzeinrichtung oder von Seiten des Transportsystems initiiert werden. Hierunter ist zu verstehen, dass der Aufbau der Kommunikationsverbindung entweder von der Assistenzeinrichtung oder dem Transportsystem eingeleitet wird. Die Kommunikationsverbindung ist zum Übertragen von Daten vorgesehen und ausgebildet. Die Kommunikationsverbindung liegt insbesondere als drahtlose Kommunikationsverbindung vor. Selbstverständlich kann alternativ auch eine kabelgebundene Kommunikationsverbindung realisiert sein, bei welcher die Assistenzeinrichtung über ein Kabel mit dem Transportsystem, insbesondere dem Transportmittel, zu verbinden ist beziehungsweise verbunden wird.

Im Rahmen einer zweiten Bedingung wird auf die Zuladung des Transportmittels beziehungsweise das Vorliegen der Zuladung oder zumindest die Änderung der Zuladung geprüft. Wird auf das Vorliegen der Zuladung oder zumindest die Änderung der Zuladung erkannt, so wird - sofern wenigstens eine der anderen Bedingungen ebenfalls erfüllt ist - auch auf die Benutzung des Transportmittels und mithin auf das Vorliegen des Benutzungszeitraums beziehungsweise den Beginn des Benutzungszeitraums erkannt.

Beispielsweise wird festgestellt, dass der Benutzungszeitraum vorliegt, solange die Zuladung des Transportmittels gegeben ist und wenigstens eine der anderen Bedingungen erfüllt ist. Hingegen wird lediglich auf den Beginn des Benutzungszeitraums erfasst, wenn die Änderung der Zuladung erkannt wird und eine der weiteren Bedingungen erfüllt ist. In anderen Worten liegt der Benutzungszeitraum vor, solange die Zuladung des Transportmittels gegeben ist und eine der anderen Bedingungen zusätzlich erfüllt ist. Der Beginn des Benutzungszeitraums hingegen fällt mit dem Zeitpunkt zusammen, in welchem die Änderung der Zuladung auftritt und eine der anderen Bedingungen erfüllt ist.

Eine dritte Bedingung überprüft auf die Bewegung des Transportmittels beziehungsweise den Betrieb der Antriebseinrichtung. Auch hier kann es vorgesehen sein, dass der Benutzungszeitraum vorliegt, solange die Bewegung des Transportmittels beziehungsweise der Betrieb der Antriebseinrichtung gegeben ist und eine der anderen Bedingungen erfüllt ist. Der Beginn des Benutzungszeitraums hingegen fällt mit dem Zeitpunkt zusammen, in welchem die Bewegung des Transportmittels beginnt oder der Betrieb der Antriebseinrichtung eingeleitet wird und eine der anderen Bedingungen erfüllt ist.

Die Anforderung, dass wenigstens zwei der genannten Bedingungen erfüllt sein müssen, damit auf die Benutzung des Transportmittels beziehungsweise das Vorliegen des Benutzungszeitraums oder zumindest den Beginn des Benutzungszeitraums erkannt wird, ermöglicht eine besonders zuverlässige Erkennung und mithin eine transparente Abrechnung gegenüber dem Benutzer. Selbstverständlich kann es auch vorgesehen sein, dass alle der Bedingungen erfüllt sein müssen, damit auf die Benutzung des Transportmittels erkannt wird.

Besonders bevorzugt ist es vorgesehen, dass die Bedingung, dass die Kommunikationsverbindung der Assistenzeinrichtung mit dem Transportsystem vorliegen oder aufgebaut werden muss, eine notwendige Bedingung ist und mithin stets erfüllt sein muss, um auf das Vorliegen oder den Beginn des Benutzungszeitraums zu erkennen. Damit auf die Benutzung des Transportmittels erkannt wird, muss neben dieser Bedingung wenigstens eine der beiden anderen Bedingungen erfüllt sein.

Das Transportsystem dient grundsätzlich dem Transport einer Ladung. Diese kann beliebig sein und sich nach den Anforderungen an das Transportsystem richten. Beispielsweise liegt die Ladung in Form eines Transportguts und/oder wenigstens eines Lebewesens vor, wobei unter letzterem wenigstens eine Person, insbesondere der Benutzer, und/oder wenigstens ein Tier zu verstehen ist. Dient das Transportsystem dem Transportieren des Transportguts gegen Entgelt, so kann das Transportgut auch als Frachtgut bezeichnet werden. das Transportgut selbst beziehungsweise das Frachtgut kann ebenfalls in beliebiger Form vorliegen, beispielsweise als Containergut, Flüssiggut, Greifergut, Massengut, Sauggut, Schüttgut oder Stückgut.

Das Transportsystem beziehungsweise das Transportmittel ist an die Ladung beziehungsweise das Transportgut angepasst beziehungsweise zumindest anpassbar. Im Falle des Containerguts bedeutet dies beispielsweise, dass das Transportmittel zum Transportieren eines das Containergut aufnehmenden Containers vorgesehen und ausgebildet ist. Liegt die Ladung in Form des wenigstens einen Lebewesens vor, so weist das Transportsystem beziehungsweise das Transportmittel beispielsweise eine entsprechende Transportkabine auf beziehungsweise ist um eine solche ergänzbar. Die Transportkabine liegt beispielsweise in Form einer Fahrgastkabine vor. Alternativ zu der bevorzugt geschlossenen Transportkabine kann selbstverständlich ein offener Beförderungsplatz vorgesehen sein, also beispielsweise ein Sitzplatz. In letzterem Fall ist dem Transportmittel bevorzugt ein Sitz zugeordnet beziehungsweise mit ihm verbunden.

Das Transportsystem weist bevorzugt eine Vielzahl von Transportmitteln auf. Die Transportmittel können grundsätzlich untereinander verschieden sein oder zumindest teilweise oder insgesamt identisch aufgebaut sein. Jedes der Transportmittel ist besonders bevorzugt unabhängig von jedem anderen der Transportmittel bewegbar. Das bedeutet insbesondere, dass jedes der Transportmittel völlig autonom betreibbar ist, also beispielsweise autonom und automatisch einem ihm zugewiesenen Transportstartort und/oder Transportzielort anfährt beziehungsweise anfahren kann. Hierzu ist das Transportmittel beziehungsweise sind die Transportmittel entsprechend ausgestaltet, weist/weisen also zum Beispiel Mittel zur Durchführung eines autonomen beziehungsweise selbstständigen Fahrbetriebs auf. Diese Mittel können insbesondere eine Navigationseinrichtung, eine Routenfindungseinrichtung, eine Umfelderkennungseinrichtung oder dergleichen umfassen.

Die Transportmittel sind bevorzugt emissionslos, erzeugen bei ihrem Betrieb also keine oder nahezu keine Abgase. Dies wird beispielsweise durch einen rein elektrischen Betrieb der Transportmittel gewährleistet. Bevorzugt verfügt insoweit jedes der Transportmittel über eine elektrische Maschine zu seinem Antrieb sowie einen entsprechenden Energiespeicher für die zum Betreiben des Antriebs benötigte elektrische Energie. Zusätzliche Anforderungen an das beziehungsweise die Transportmittel können sich aus gegebenenfalls einzuhaltenden Sicherheitsbestimmungen des Betriebsorts ergeben, insbesondere falls die Transportmittel auf öffentlichem Gebiet, bevorzugt öffentlichen Straßen, betreibbar sein sollen.

Eine weitere Ausführungsform der Erfindung sieht vor, dass auf ein Ende des Benutzungszeitraums erkannt wird, falls wenigstens eine der nachfolgenden Bedingungen erfüllt ist: Die Kommunikationsverbindung der Assistenzeinrichtung des Benutzers mit dem Transportsystem ist beendet oder wird beendet; die Zuladung entfällt oder eine Änderung der Zuladung wird erkannt; und eine Bewegung des Transportmittels und/oder ein Betrieb der Antriebseinrichtung des Transportmittels sind ausgesetzt oder werden ausgesetzt.

Der Benutzungszeitraum erstreckt sich von seinem Beginn bis hin zu seinem Ende. Während für das Erkennen auf den Beginn des Benutzungszeitraums vorzugsweise wenigstens zwei Bedingungen erfüllt sein müssen, kann es für das Erkennen auf das Ende des Benutzungszeitraums bereits ausreichend sein, dass wenigstens eine der Bedingungen erfüllt ist. Vorzugsweise ist es selbstverständlich vorgesehen, dass auch für das Erkennen auf das Ende des Benutzungszeitraums mindestens zwei Bedingungen oder alle der Bedingungen erfüllt sein müssen.

Im Rahmen einer ersten Bedingung wird für das Erkennen auf das Ende des Benutzungszeitraums darauf geprüft, ob die Kommunikationsverbindung der Assistenzeinrichtung mit dem Transportsystem beendet ist oder beendet wird. Dies erfordert, dass die Kommunikationsverbindung zuvor bestand und nun entweder bereits beendet ist oder gerade beendet wird. Im Rahmen einer zweiten Bedingung wird die Zuladung geprüft. Liegt diese nicht mehr vor, ist also entfallen beziehungsweise entfällt oder verändert sich, so ist die Bedingung erfüllt. Unter der Änderung der Zuladung ist insbesondere eine Verringerung der Zuladung zu verstehen.

Eine dritte Bedingung fordert das Aussetzen der Bewegung des Transportmittels beziehungsweise des Betriebs der Antriebseinrichtung und insoweit ein Anhalten des Transportmittels. Beispielsweise ist die Bedingung erfüllt, falls sich das Transportmittel im Stillstand befindet oder die Antriebseinrichtung deaktiviert ist, also kein auf das Antreiben des Transportmittels gerichtetes Drehmoment bereitstellt.

Insgesamt ergeben sich insoweit unterschiedliche Möglichkeiten, den Benutzungszeitraum des Transportmittels festzustellen. Es kann vorgesehen sein, auf das Vorliegen des Benutzungszeitraums zu erkennen, solange wenigstens zwei der nachfolgenden Bedingungen erfüllt sind: Die Kommunikationsverbindung der Assistenzeinrichtung mit dem Transportsystem liegt vor; die Zuladung des Transportmittels wird erkannt; und die Bewegung des Transportmittels und/oder der Betrieb der Antriebseinrichtung liegen vor.

Alternativ kann es vorgesehen sein, den Beginn des Benutzungszeitraums und das Ende des Benutzungszeitraums separat voneinander zu erfassen, wobei sich der Benutzungszeitraum von seinem Beginn bis hin zu seinem Ende erstreckt. Beispielsweise kann es hierbei vorgesehen sein, auf den Beginn des Benutzungszeitraums zu erkennen, falls wenigstens zwei der nachfolgenden Bedingungen erfüllt sind: Die Kommunikationsverbindung mit dem Transportsystem wird aufgebaut; die Änderung der Zuladung wird erkannt; die Bewegung des Transportmittels und/oder der Betrieb der Antriebseinrichtung werden eingeleitet.

Auf das Ende des Benutzungszeitraums wird bevorzugt erkannt, falls wenigstens eine der nachfolgenden Bedingungen erfüllt ist: Die Kommunikationsverbindung wird beendet; die Änderung der Zuladung wird erkannt; und die Bewegung des Transportmittels und/oder der Betrieb der Antriebseinrichtung sind ausgesetzt oder werden ausgesetzt. Diese Vorgehensweise ermöglicht die zuverlässige und transparente Abrechnung des Benutzungszeitraums gegenüber dem Benutzer.

Eine weitere Ausgestaltung der Erfindung sieht vor, dass eine während des Benutzungszeitraums von dem Transportmittel zurückgelegte Strecke ermittelt wird. Das Ermitteln der Strecke erfolgt beispielsweise mittels eines entsprechenden Messgeräts. Alternativ kann auch eine Bestimmung der Strecke durch Aufintegrieren der Geschwindigkeit des Transportmittels während des Zurücklegens der Strecke erfolgen. Auch andere Vorgehensweisen zum Ermitteln der Strecke sind grundsätzlich verwendbar. Beispielsweise wird die Strecke der Abrechnung gegenüber dem Benutzer herangezogen, sodass eine zuverlässige und transparente Abrechnung gegenüber diesem möglich ist.

Eine weitere bevorzugte Ausgestaltung der Erfindung sieht vor, dass aus der zurückgelegten Strecke und/oder einer Länge des Benutzungszeitraums ein Zahlbetrag ermittelt wird. Der Zahlbetrag ist derjenige monetäre Betrag, welcher von dem Benutzer des Transportmittels für dessen Benutzung zu entrichten ist. Der Zahlbetrag kann allein aus der zurückgelegten Strecke, allein aus der Länge des Benutzungszeitraums oder aus beiden berechnet werden. In letzterem Fall ist der Zahlbetrag insoweit eine Funktion der zurückgelegten Strecke und der Länge des Benutzungszeitraums. Dem Benutzer wird insoweit lediglich die tatsächliche Benutzung des Transportmittels berechnet, woraus sich eine einfache Überprüfung des Zahlbetrags durch den Benutzer ergibt.

Im Rahmen einer weiteren Ausführungsform der Erfindung ist vorgesehen, dass die Kommunikationsverbindung zwischen der Assistenzeinrichtung und einer Zentralsteuereinheit des Transportsystems oder zwischen der Assistenzeinrichtung und dem Transportmittel unmittelbar oder mittelbar über die Zentralsteuereinheit aufgebaut wird. Die Kommunikationsverbindung kann also grundsätzlich auf drei unterschiedliche Arten vorliegen. Zum einen kann die Kommunikationsverbindung zwischen der Assistenzeinrichtung und der Zentralsteuereinheit hergestellt sein. In diesem Fall liegt bevorzugt zwischen der Zentralsteuereinheit und dem Transportmittel eine weitere Kommunikationsverbindung vor.

Alternativ kann die Kommunikationsverbindung zwischen der Assistenzeinrichtung und dem Transportmittel unmittelbar vorliegen. Darunter ist zu verstehen, dass in der Kommunikationsverbindung zwischen der Assistenzeinrichtung und dem Transportmittel keine weitere Einrichtung, insbesondere nicht die Zentralsteuereinheit, vorliegt. Alternativ ist es jedoch selbstverständlich möglich, die Kommunikationsverbindung zwischen der Assistenzeinrichtung und dem Transportmittel über die Zentralsteuereinheit aufzubauen beziehungsweise herzustellen, sodass insoweit die Kommunikationsverbindung lediglich mittelbar vorliegt.

Die unterschiedlichen Kommunikationsverbindungen ermöglichen einen äußerst flexiblen Betrieb des Transportsystems. Beispielsweise ist es vorgesehen, zunächst die unmittelbare Kommunikationsverbindung zwischen der Assistenzeinrichtung und dem Transportmittel aufzubauen. Ist dies nicht erfolgreich, so wird die Kommunikationsverbindung zwischen der Assistenzeinrichtung und der Zentralsteuereinheit aufgebaut. War dies erfolgreich, so kann nachfolgend entweder die weitere Kommunikationsverbindung aufgebaut oder die Kommunikationsverbindung von der Zentralsteuereinheit auf das Transportmittel erstreckt werden.

Beispielsweise ist es hierzu vorgesehen, zunächst die weitere Kommunikationsverbindung zwischen der Zentralsteuereinheit und dem Transportmittel aufzubauen, um sicherzustellen, dass das Transportmittel kontaktierbar ist. War das Aufbauen der weiteren Kommunikationsverbindung erfolgreich, so kann diese beendet und anstelle die Kommunikationsverbindung von der Zentralsteuereinrichtung auf das Transportmittel erstreckt werden, sodass schlussendlich die mittelbare Kommunikationsverbindung zwischen der Assistenzeinrichtung und dem Transportmittel vorliegt, welche über die Zentralsteuereinheit verläuft.

Eine Weiterbildung der Erfindung sieht vor, dass als unmittelbar aufgebaute Kommunikationsverbindung eine Kurzstreckendrahtloskommunikationsverbindung verwendet wird. Die Kurzstreckendrahtloskommunikationsverbindung ermöglicht beispielsweise eine drahtlose Kommunikation über eine Entfernung von höchstens 50 m, höchstens 25 m oder höchstens 10 m. Beispielsweise wird die Kurzstreckendrahtloskommunikationsverbindung über Bluetooth oder Near Field Communication (NFC) aufgebaut. Aufgrund der unmittelbaren kommunikationstechnischen Anbindung der Assistenzeinrichtung an das Transportmittel wird eine hohe Sicherheit hinsichtlich der übertragenen Daten erzielt.

Eine weitere bevorzugte Ausführungsform der Erfindung sieht vor, dass als Kommunikationsverbindung zu der Zentralsteuereinheit eine Mobilfunkverbindung verwendet wird. Die Mobilfunkverbindung unterscheidet sich von der Kurzstreckendrahtloskommunikationsverbindung insbesondere durch ihre höhere Reichweite. Beispielsweise kann mittels der Mobilfunkverbindung eine Entfernung von mehr als 100 m, mindestens 500 m oder mindestens 1000 m überbrückt werden. Die Mobilfunkverbindung wird beispielsweise per GSM, UMTS oder LTE aufgebaut. Derartige Verbindung sind weit verbreitet und können daher zur zuverlässigen Übertragung von Daten herangezogen werden.

Eine weitere Ausführungsform der Erfindung sieht vor, dass die Zuladung mittels einer Waage gemessen wird. Das Transportmittel verfügt insoweit über die Waage, welche in das Transportmittel integriert ist. Mithilfe der Waage kann die derzeitige Masse beziehungsweise das derzeitige Gewicht des Transportmittels ermittelt werden, von welchem beziehungsweise welcher vorzugsweise eine Leermasse beziehungsweise ein Leergewicht abgezogen wird. Aus dem Ergebnis wird die Zuladung des Transportmittels ermittelt oder zumindest auf die Änderung der Zuladung geprüft.

Das Verwenden der Waage ermöglicht ein besonders zuverlässiges Feststellen, ob der Benutzer das Transportmittel benutzt, beispielsweise sich selbst an Bord des Transportmittels befindet. Es kann vorgesehen sein, dass die Zuladung, welche mittels der Waage gemessen wird, zusätzlich oder alternativ in den Zahlbetrag einfließt, sodass also der durch den Benutzer zu entrichtende Zahlbetrag auf der Zuladung beruht. Dies ermöglicht eine besonders benutzungsspezifische Abrechnung gegenüber dem Benutzer.

Schließlich kann im Rahmen einer weiteren Ausgestaltung der Erfindung vorgesehen sein, dass von der Zentralsteuereinheit und/oder der Assistenzeinrichtung ein Zielort an das Transportmittel übermittelt wird und das Transportmittel den Zielort autonom anfährt. Das Anfahren des Zielorts durch das Transportmittel erfolgt also ohne Einfluss einer Bedienperson, insbesondere des Benutzers und/oder der Assistenzeinrichtung, von welcher der Zielort beispielsweise übermittelt wurde. Vielmehr übernimmt das Transportmittel selbst seine Routenplanung, welche es von seinem momentanen Standort zu dem Zielort führt.

Die Routenplanung kann jedoch auch von der Zentralsteuereinheit übernommen werden und beispielsweise vor dem Beginn des Anfahrens des Zielorts oder bei dem Beginn des Anfahrens dem Transportmittel übermittelt werden. Das Transportmittel ist besonders bevorzugt für einen vollständig autonomen Fahrbetrieb ausgerüstet. Insbesondere verfügt das Transportmittel über eine entsprechende Sensoreinrichtung, insbesondere eine Umfelderkennungseinrichtung, die vorzugsweise wenigstens einen Umfeldsensor aufweist, oder dergleichen.

Die Erfindung betrifft weiterhin ein Transportsystem, insbesondere zur Durchführung des Verfahrens gemäß den Ausführungen im Rahmen dieser Beschreibung, mit wenigstens einem Transportmittel. Dabei ist vorgesehen, dass das Transportsystem dazu ausgebildet ist, einen Benutzungszeitraum des Transportmittels durch einen Benutzer oder zumindest einen Beginn des Benutzungszeitraums zu erfassen, indem auf eine Benutzung des Transportmittels erkannt wird, falls wenigstens zwei der nachfolgenden Bedingungen erfüllt sind: Eine Kommunikationsverbindung einer Assistenzeinrichtung des Benutzers mit dem Transportsystem liegt vor oder wird aufgebaut; eine Zuladung des Transportmittels oder eine Änderung der Zuladung wird erkannt; und eine Bewegung des Transportmittels und/oder ein Betrieb einer Antriebseinrichtung des Transportmittels liegen vor oder werden eingeleitet.

Auf die Vorteile einer derartigen Vorgehensweise beziehungsweise einer derartigen Ausgestaltung des Transportsystems wurde bereits eingegangen. Sowohl das Transportsystem als auch das Verfahren zu seinem Betreiben können gemäß den Ausführungen im Rahmen dieser Beschreibung weitergebildet sein, sodass insoweit auf diese verwiesen wird.

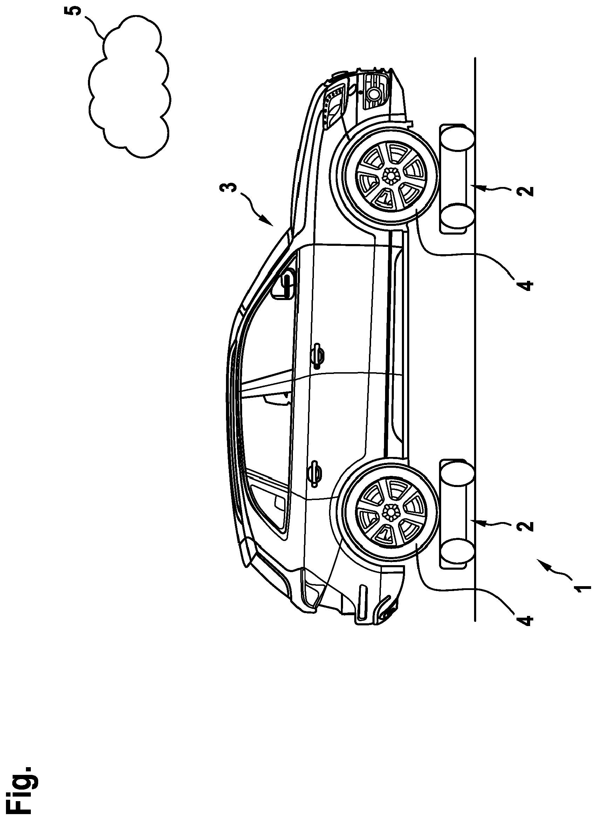

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Transportmittels eines Transportsystems sowie eines mithilfe des Transportmittels transportierten Fahrzeugs.

Die Figur zeigt eine schematische Darstellung eines Transportsystems 1, das über wenigstens ein Transportmittel 2, in dem hier dargestellten Ausführungsbeispiel über zwei Transportmittel 2, verfügt. Die Transportmittel 2 arbeiten zusammen, um ein Fahrzeug 3 zu transportieren. Hierzu nehmen Sie das Fahrzeug 3 auf, sodass Räder 4 des Fahrzeugs 3 auf dem Transportmittel 2 angeordnet sind. Das Fahrzeug 3 gehört einem Benutzer, welcher beispielsweise auf einem Fahrersitz des Fahrzeugs 3 sitzt (hier nicht dargestellt).

Zusätzlich zu den Transportmitteln 2 verfügt das Transportsystem 1 über eine Zentralsteuereinheit 5. Es ist nun vorgesehen, einen Benutzungszeitraum des wenigstens einen Transportmittels 2 beziehungsweise der beiden Transportmittel 2 durch den Benutzer zu erfassen. Hierzu wird auf eine Benutzung des Transportmittels beziehungsweise der Transportmittel 2 erkannt, falls wenigstens zwei der nachfolgenden Bedingungen erfüllt sind: Eine Kommunikationsverbindung zwischen einer Assistenzeinrichtung des Benutzers und dem Transportsystem 1, insbesondere dem wenigstens einen Transportmittel 2 oder der Zentralsteuereinheit 5, liegt vor oder wird aufgebaut; eine Zuladung des wenigstens einen Transportmittels 2 oder eine Änderung der Zuladung wird erkannt; und eine Bewegung des wenigstens einen Transportmittels 2 und/oder einem Betrieb einer Antriebseinrichtung des wenigstens einen Transportmittels 2 liegen vor oder werden eingeleitet.

Bevorzugt ist es vorgesehen, eine während des Benutzungszeitraums von dem wenigstens einen Transportmittel 2 zurückgelegte Strecke zu ermitteln. Diese Strecke wird anschließend zusammen mit der Länge des Benutzungszeitraums zur Abrechnung der Benutzung gegenüber dem Benutzer herangezogen. In anderen Worten wird aus der zurückgelegten Strecke und der (zeitlichen) Länge beziehungsweise Dauer des Benutzungszeitraums ein Zahlbetrag ermittelt, welcher dem Benutzer in Rechnung gestellt wird. Eine solche Vorgehensweise ermöglicht eine äußerst flexible und transparente Abrechnung gegenüber dem Benutzer.

## Patentansprüche

1. Verfahren zum Betreiben eines wenigstens ein Transportmittel (2) aufweisenden Transportsystems (1), **dadurch gekennzeichnet, dass** ein Benutzungszeitraum des Transportmittels (2) durch einen Benutzer oder zumindest ein Beginn des Benutzungszeitraums erfasst wird, indem auf eine Benutzung des Transportmittels (2) erkannt wird, falls wenigstens zwei der nachfolgenden Bedingungen erfüllt sind:
- eine Kommunikationsverbindung einer Assistenzeinrichtung des Benutzers mit dem Transportsystem (1) liegt vor oder wird aufgebaut;
- eine Zuladung des Transportmittels (2) oder eine Änderung der Zuladung wird erkannt, und
- eine Bewegung des Transportmittels (2) und/oder ein Betrieb einer Antriebseinrichtung des Transportmittels (2) liegen vor oder werden eingeleitet.

2. Verfahren nach Anspruch 1, **dadurch gekennzeichnet, dass** auf ein Ende des Benutzungszeitraums erkannt wird, falls wenigstens eine der nachfolgenden Bedingungen erfüllt ist:
- die Kommunikationsverbindung der Assistenzeinrichtung des Benutzers mit dem Transportsystem (1) ist beendet oder wird beendet;
- die Zuladung entfällt oder eine Änderung der Zuladung wird erkannt; und
- eine Bewegung des Transportmittels (2) und/oder ein Betrieb einer Antriebseinrichtung des Transportmittels (2) sind ausgesetzt oder werden ausgesetzt.

3. Verfahren nach einem der vorhergehenden Ansprüche, **dadurch gekennzeichnet, dass** eine während des Benutzungszeitraums von dem Transportmittel (2) zurückgelegte Strecke ermittelt wird.

4. Verfahren nach einem der vorhergehenden Ansprüche, **dadurch gekennzeichnet, dass** aus der zurückgelegten Strecke und/oder einer Länge des Benutzungszeitraums ein Zahlbetrag ermittelt wird.

5. Verfahren nach einem der vorhergehenden Ansprüche, **dadurch gekennzeichnet, dass** die Kommunikationsverbindung zwischen der Assistenzeinrichtung und einer Zentralsteuereinheit (5) des Transportsystems (1) oder zwischen der Assistenzeinrichtung und dem Transportmittel (2) unmittelbar oder mittelbar über die Zentralsteuereinheit (5) aufgebaut wird.

6. Verfahren nach einem der vorhergehenden Ansprüche, **dadurch gekennzeichnet,** das als unmittelbar aufgebaute Kommunikationsverbindung eine Kurzstreckendrahtloskommunikationsverbindung verwendet wird.

7. Verfahren nach einem der vorhergehenden Ansprüche, **dadurch gekennzeichnet, dass** als Kommunikationsverbindung zu der Zentralsteuereinheit (5) eine Mobilfunkverbindung verwendet wird.

8. Verfahren nach einem der vorhergehenden Ansprüche, **dadurch gekennzeichnet, dass** die Zuladung mittels einer Waage gemessen wird.

9. Verfahren nach einem der vorhergehenden Ansprüche, **dadurch gekennzeichnet, dass** von der Zentralsteuereinheit (5) und/oder der Assistenzeinrichtung ein Zielort an das Transportmittel (2) übermittelt wird und das Transportmittel (2) den Zielort autonom anfährt.

10. Transportsystem (1), insbesondere zur Durchführung des Verfahrens nach einem oder mehreren der vorhergehenden Ansprüche, mit wenigstens einem Transportmittel (2), **dadurch gekennzeichnet, dass** das Transportsystem (1) dazu ausgebildet ist, einen Benutzungszeitraum des Transportmittels (2) durch einen Benutzer oder zumindest einen Beginn des Benutzungszeitraums zu erfassen, indem auf eine Benutzung des Transportmittels (2) erkannt wird, falls wenigstens zwei der nachfolgenden Bedingungen erfüllt sind:
- eine Kommunikationsverbindung einer Assistenzeinrichtung des Benutzers mit dem Transportsystem (1) liegt vor oder wird aufgebaut;
- eine Zuladung des Transportmittels (2) oder eine Änderung der Zuladung wird erkannt; und
- eine Bewegung des Transportmittels (2) und/oder ein Betrieb einer Antriebseinrichtung des Transportmittels (2) liegen vor oder werden eingeleitet.

## Geänderte Patentansprüche

### Geänderte Patentansprüche gemäss Regel 137(2) EPÜ.

1. Verfahren zum Betreiben eines wenigstens ein Transportmittel (2) aufweisenden Transportsystems (1), **dadurch gekennzeichnet, dass** ein Benutzungszeitraum des Transportmittels (2) durch einen Benutzer erfasst wird, indem auf eine Benutzung des Transportmittels (2) erkannt wird, falls wenigstens zwei der nachfolgenden Bedingungen erfüllt sind:
- eine Kommunikationsverbindung einer Assistenzeinrichtung des Benutzers mit dem Transportsystem (1) liegt vor oder wird aufgebaut, wobei die Kommunikationsverbindung zwischen der Assistenzeinrichtung und einer Zentralsteuereinheit (5) des Transportsystems (1) oder zwischen der Assistenzeinrichtung und dem Transportmittel (2) unmittelbar oder mittelbar über die Zentralsteuereinheit (5) aufgebaut wird;
- eine Zuladung des Transportmittels (2) oder eine Änderung der Zuladung wird erkannt, wobei die Zuladung mittels einer Waage gemessen wird; und
- eine Bewegung des Transportmittels (2) und/oder ein Betrieb einer Antriebseinrichtung des Transportmittels (2) liegen vor oder werden eingeleitet, wobei von der Zentralsteuereinheit (5) und/oder der Assistenzeinrichtung ein Zielort an das Transportmittel (2) übermittelt wird und das Transportmittel (2) den Zielort autonom anfährt; und
indem auf ein Ende des Benutzungszeitraums erkannt wird, falls wenigstens eine der nachfolgenden Bedingungen erfüllt ist:
- die Kommunikationsverbindung der Assistenzeinrichtung des Benutzers mit dem Transportsystem (1) ist beendet oder wird beendet;
- die Zuladung entfällt oder eine Änderung der Zuladung wird erkannt; und
- eine Bewegung des Transportmittels (2) und/oder ein Betrieb einer Antriebseinrichtung des Transportmittels (2) sind ausgesetzt oder werden ausgesetzt.

2. Verfahren nach Anspruch 1, **dadurch gekennzeichnet, dass** eine während des Benutzungszeitraums von dem Transportmittel (2) zurückgelegte Strecke ermittelt wird.

3. Verfahren nach einem der vorhergehenden Ansprüche, **dadurch gekennzeichnet, dass** aus der zurückgelegten Strecke und/oder einer Länge des Benutzungszeitraums ein Zahlbetrag ermittelt wird.

4. Verfahren nach einem der vorhergehenden Ansprüche, **dadurch gekennzeichnet,** das als unmittelbar aufgebaute Kommunikationsverbindung eine Kurzstreckendrahtloskommunikationsverbindung verwendet wird.

5. Verfahren nach einem der vorhergehenden Ansprüche, **dadurch gekennzeichnet, dass** als Kommunikationsverbindung zu der Zentralsteuereinheit (5) eine Mobilfunkverbindung verwendet wird.

6. Transportsystem (1), insbesondere zur Durchführung des Verfahrens nach einem oder mehreren der vorhergehenden Ansprüche, mit wenigstens einem Transportmittel (2), **dadurch gekennzeichnet, dass** das Transportsystem (1) dazu ausgebildet ist, einen Benutzungszeitraum des Transportmittels (2) durch einen Benutzer zu erfassen, indem auf eine Benutzung des Transportmittels (2) erkannt wird, falls wenigstens zwei der nachfolgenden Bedingungen erfüllt sind:
- eine Kommunikationsverbindung einer Assistenzeinrichtung des Benutzers mit dem Transportsystem (1) liegt vor oder wird aufgebaut, wobei die Kommunikationsverbindung zwischen der Assistenzeinrichtung und einer Zentralsteuereinheit (5) des Transportsystems (1) oder zwischen der Assistenzeinrichtung und dem Transportmittel (2) unmittelbar oder mittelbar über die Zentralsteuereinheit (5) aufgebaut wird;
- eine Zuladung des Transportmittels (2) oder eine Änderung der Zuladung wird erkannt, wobei die Zuladung mittels einer Waage gemessen wird; und
- eine Bewegung des Transportmittels (2) und/oder ein Betrieb einer Antriebseinrichtung des Transportmittels (2) liegen vor oder werden eingeleitet, wobei von der Zentralsteuereinheit (5) und/oder der Assistenzeinrichtung ein Zielort an das Transportmittel (2) übermittelt wird und das Transportmittel (2) den Zielort autonom anfährt; und
indem auf ein Ende des Benutzungszeitraums erkannt wird, falls wenigstens eine der nachfolgenden Bedingungen erfüllt ist:
- die Kommunikationsverbindung der Assistenzeinrichtung des Benutzers mit dem Transportsystem (1) ist beendet oder wird beendet;
- die Zuladung entfällt oder eine Änderung der Zuladung wird erkannt; und
- eine Bewegung des Transportmittels (2) und/oder ein Betrieb einer Antriebseinrichtung des Transportmittels (2) sind ausgesetzt oder werden ausgesetzt.
